# EUROPEAN PATENT APPLICATION

(11) **EP 1 672 278 A1**
(43) Date of publication of application: **21.06.2006**
(21) Application number: 05468018.6
(22) Date of filing: 22.11.2005
(51) Int. Cl.: F22B 1/18, F24H 9/00, F24H 1/28, F24H 8/00, F22B 37/06, F22B 13/00

(54) **Condensing heating apparatus**

(30) Priority: 01.12.2004 SI 200400325
(71) Applicant: Alpiterm d.o.o., 5290 Sempeter pri Gorici (SI)
(72) Inventor: Mrva, Marko, 1252 Vace (SI)
(74) Representative: Ivancic, Bojan

(57) **Abstract**

The present invention refers to a heating apparatus for warm/hot water preparation for heating and sanitary purposes, in particular to a condensing heating apparatus. Said heating apparatus comprises a combustion chamber (1) and a vertically orientated section (2) for heat exchange between flue gases and heating fluid, said section (2) is associated with a chamber (1) at the bottom end thereof. Here, said section (2) is formed by a number of concentric and mutually radially spaced double walls (16, 17, 18), thus forming ring-shaped flue gas channels (19, 20) between each neighbouring double walls (16, 17; 17, 18). Each double wall (16, 17, 18) is formed on the side facing each other with bulges (29) extending over the entire circumference of each double wall (16, 17, 18), whereas in the space between each double walls (16, 17, 18) there is arranged a partition wall (28) extending in a helix-like manner.

## Description

The present invention refers to a heating apparatus for warm/hot water preparation for heating and sanitary purposes, in particular to a condensing heating apparatus comprising flue gas channels and heating fluid channels where the flue gas produced in a burner flows through flue gas channels and transfers heat to the heating fluid flowing through said heating fluid channels.

Heating apparatuses of the aforementioned type are well known. Thus, a heating apparatus exists, for example, consisting of two parts i.e. of a primary heating part and a secondary condensing part. A drawback of said solution lies in the relatively large ground plan area and the volume occupied by said heating apparatus. In general, drawbacks of the known condensing heating apparatuses type lie in particular in the relatively large size and, in addition, cleaning of the interior i.e. of the combustion chamber is a relatively intricate and time consuming task because very often it is a case that the entire apparatus has to be dismantled.

It is the aim of the present invention to create a condensing heating apparatus with which all the drawbacks of the known solutions are eliminated.

According to the invention, the aim as set above is solved by a section which is associated with the lower end of the combustion chamber which is enclosed by a double wall, said section extends in height and is intended for heat exchange between the flue gas and the heating fluid, said combustion chamber being separated from said section by a dome-like means of directing. The latter is formed on the side where a burner is attached thereto with an opening for the flue gases to pass into said section. A funnel-like means of directing for the flue gases is associated with that side of the section which is turned away from the combustion chamber, said funnel-like means of directing being surrounded by a condensate trap wherefrom flue gases are led to a flue gas connection and further to a chimney. Said heat exchange section is formed by a number of concentric double walls being mutually radially spaced. Placing the double walls in a concentric pattern results in two ring-like flue gas channels formed between each pair of the neighbouring double walls. Furthermore, according to the invention it is provided for that concentrically with the inner double wall of said heat exchange section and abutting against the inner wall thereof there is arranged over the entire height a number of flue gas directing elements. The latter preferably resemble the form of a crown cap. Each double wall of the heat exchange section is formed on the sides facing each other with projections extending over the entire rim of each double wall.

According to the invention it is provided for that the embodiment of the heating apparatus is formed in a way that the outer section of the outer double wall is arranged eccentrically with regard to the vertical axis of the heating apparatus. Furthermore, it is provided that in the space between each double walls there is arranged a partition wall extending in a helix-like manner.

According to the invention the coils of each partition wall which extend in a helix-like manner preferably lie in a horizontal plane, and the coiling centre-line of the helix corresponds to the vertical centre-line of the heat exchange section. The preferred embodiment also provided for that the projections of the double walls of said section facing each other are vertically displaced relatively to each other, preferably in amount of half of the pitch *t* between said neighbouring projections.

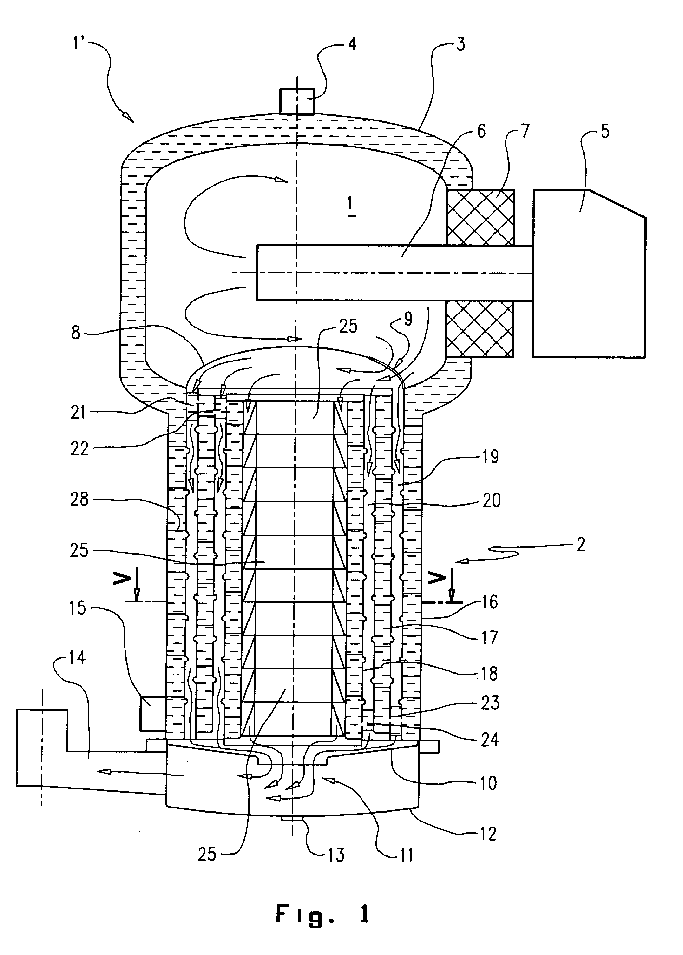

The present invention will become more fully understood from the detailed description given hereinafter and the accompanying drawings, wherein
- Fig. 1: shows a vertical cross-sectional view of a heating apparatus according to the invention;
- Fig. 2: shows a detail of a heat exchanger of the heating apparatus of Fig. 1;
- Fig. 3: shows a top view of the directing element for the flue gases of the heating apparatus of Fig. 1;
- Fig. 4: shows a partial cross-sectional view of the directing element of Fig. 3;

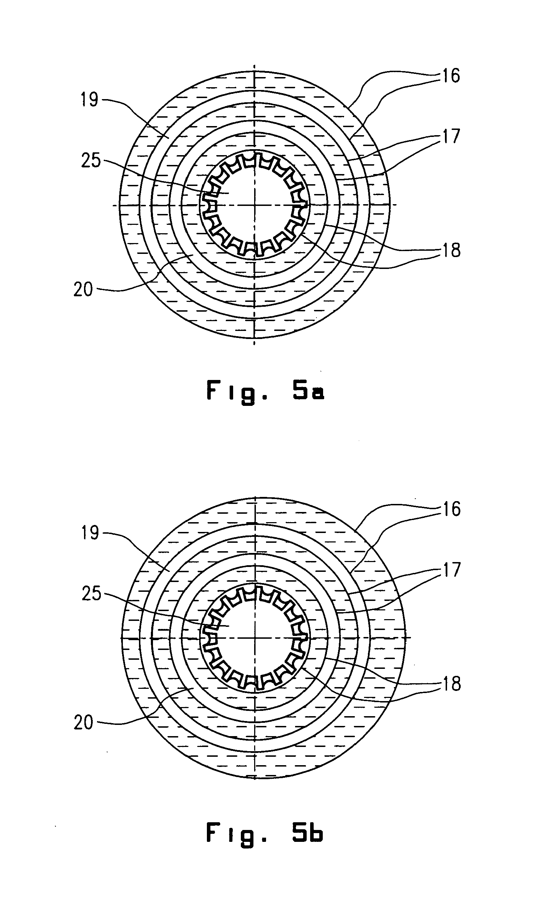

- Fig. 5a: shows a cross-sectional view along the line V-V of Fig. 1; and
- Fig. 5b: shows a cross-sectional view along the line V-V of Fig. 1 of the second embodiment.

A heating apparatus according to the invention consists of a combustion chamber 1 enclosed by a double wall 1' and of a vertically oriented section 2 for exchanging the heat between the flue gasses and the heating fluid, as for instance, water. The combustion chamber 1 as well as the section 2 are preferably formed as a cylinder. The combustion chamber 1 is closed with a dome-like cover 3 at the first end, i.e. at the upper end, to which there is associated a pipe connection 4 for supplying the piping system with the warm water, not shown in the Figures. The heating fluid i.e. the water, is located in the space inside the double wall 1' of the combustion chamber 1. A burner 5 known, *per se,* projects into the combustion chamber 1, and an insert 7 is arranged between a combustion section 6 of said burner 5 and the wall 1', said insert 7 being made of insulating material. The heat exchanging section 2 is associated with the lower section of the combustion chamber 1 in a manner that the water can freely flow in the space between the double wall 1' and the section 2. The combustion chamber 1 is closed on the side opposite to section 2 by a dome-like means 8 of directing the flue gases which is on the side of the attachment of the burner 5 provided with an opening 9 through which flue gases are redirected into said section 2. A funnel-like means 10 of directing is associated with the bottom end of the section 2, said means 10 comprising a centrally formed opening 11 through which flue gases pass from the section 2 in a condensate trap 12. The latter is associated with the section 2 directly after said directing means 10, a pipe connection 13 for the condensate discharge being connected to the lowest point of the bottom of said means 10. A connection 14 for the flue gas removal is lead from said trap 12 into a chimney not shown. According to the invention it is provided for that the means 10 of directing flue gas and the condensate trap 12 are formed in a manner that together they form a silencer which dampens the sound of the flue gases originating and flowing in the heating apparatus. The section 2 is provided in the area of the bottom end and on the outer side thereof with a pipe connection 15 for supplying the heating apparatus with the returning cooled water.

According to the invention, said vertically orientated section 2 for heat exchange between the flue gases and the heating fluid is formed by a number of concentric and mutually radially spaced double walls 16, 17, 18, thus forming ring-shaped flue gas channels 19, 20 between each pair of double walls 16, 17 and 17, 18, flue gases which are redirected by the dome-like means 8 of directing from the combustion chamber 1 through the opening 9 travel now through said channels 19, 20. In order to allow free circulation of water over the entire heating apparatus said double walls 16, 17, 18 are interconnected, firstly in the area of the upper end by means of a connecting channel 21; 22 between the walls 16, 17; 17, 18, and secondly in the area of the bottom end by means of a connecting channel 23; 24 between the walls 16, 17; 17 18.

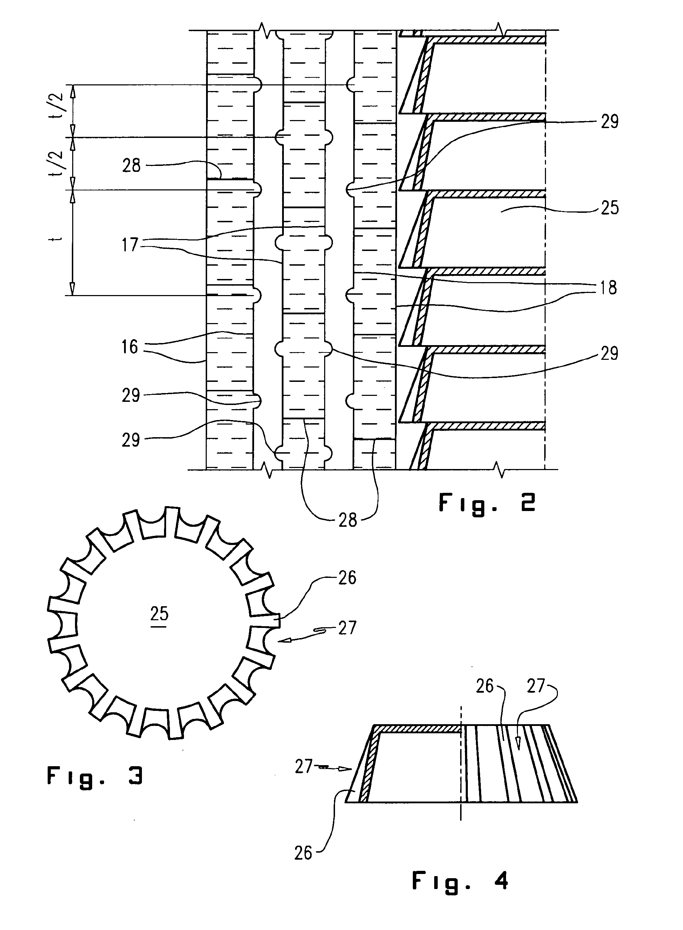

A number of flue gas directing elements 25 resembling the form of a crown cap (cf. e.g. Fig. 2 and Fig. 3) are arranged concentrically with the inner double wall 18 and abutting against the inner wall thereof. Said elements 25 abut against each other and force the flue gases to flow between each serrated rim thereof, and thus to transfer as much heat to the water as possible. Said effect is achieved by that each element 25 is formed over the entire rim thereof with a number of alternating projections 26 and depressions 27, where flue gases flow downwards from one element 25 to another through the interspace between the projections 26.

In order to facilitate the heat transfer from the flue gases to section 2 it is provided for, according to the invention, that each double wall 16, 17, 18 of the section 2 is formed on the sides facing each other with bulges 29. Said bulges 29, being preferably semicircular, extend over the entire circumference of the each double wall 16, 17, 18, and the bulges 29 of the double walls which face each other are offset against each other, preferably for a half of the pitch *t* between the two neighbouring bulges 27 when viewed in the vertical direction.

Furthermore, it is provided according to the invention that in the space between each of the double walls 16, 17, 18 there is arranged a partition wall 28 extending in a helix-like manner, the coils thereof lie in the horizontal plane and the coiling centre coincides with the vertical centre line of the section 2. According to the invention it is provided for that the plane of each coil of the first double wall is offset in the vertical direction with respect to the plane of each coil of the neighbouring double wall. Incorporating the helix-like partition wall 28 into the interspace of the double wall the path of the heating water in the heat exchanger becomes much longer resulting in a better heat exchange between the flue gases and the heating water.

Flue gases entering section 2 of the heating apparatus according to the invention cool down on the double walls resulting in the condensate starting to collect on said walls. The condensate flows over said walls and additionally transfers the so called latent heat to the heating water. Said bulges 29 of the double walls withhold the condensate from running out to early to the condensate trap 12.

One of the possible embodiments of the heating apparatus according to the invention provides for that the outer section of the outer double wall 16, i.e. the section facing away from the flue gases flow, is arranged eccentrically with respect to the centre line of the heating apparatus. With said embodiment it is provided for that the helix-like partition wall 28 which is arranged in the space between each of the double walls 16, 17, 18 can be omitted. These two measures reflect the heating water to flow over the heating apparatus without any need for an additional device for forced circulation of the water.

## Claims

1. A heating apparatus for warm/hot water preparation for heating and sanitary purposes, in particular to a condensing heating apparatus comprising flue gas channels and heating fluid channels where flue gas produced by a burner flows through flue gas channels and transfers heat to heating fluid flowing through said heating fluid channels **characterized in that** a vertically orientated section (2) is associated with the lower end of a combustion chamber (1) being enclosed by a double wall (1'), said section (2) being intended for heat exchange between flue gases and heating fluid, said combustion chamber (1) is separated from the section (2) by virtue of a dome-like means (8) of directing for flue gases which is provided at the side of the attachment of a burner (5) with an opening (9) for the flue gases to pass into said section (2), where to the side of the section (2), which is averted from the combustion chamber (1), there is associated a funnel-like means (10) of directing for the flue gases which is enclosed with a condensate trap (12) wherefrom flue gases are led into a flue gas connection (14), and where said section (2) is formed by a number of double walls (16, 17, 18) arranged concentrically and radially spaced against each other, thus resulting in flue gas channels (19, 20) between each neighbouring double walls (16, 17; 17, 18), whereas concentrically with the inner double wall (18) and abutting the inner wall thereof and over the entire height of the section (2) there is arranged a number of flue gas directing elements (25), each said double wall (16, 17, 18) is formed at the side facing each other with bulges (29) extending over the entire circumference of each double wall (16, 17, 18).

2. A heating apparatus according to claim 1 **characterized in that** the outer section of the outer double wall (16) is arranged eccentrically with respect to the centre line of the heating apparatus.

3. A heating apparatus according to claim 1 and 2 **characterized in that** in the space between each double walls (16, 17, 18) there is arranged a partition wall (28) extending in a helix-like manner, the coils thereof lie in the horizontal plane and the centre of the coiling lies in the vertical centre-line of the section (2).

4. A heating apparatus according to any of the proceeding claims **characterized in that** the bulges (29) of the double walls of the section (2) facing each other are vertically offset against each other, preferably for a half of the pitch *t* between the neighbouring bulges (29).

5. A heating apparatus according to any of the proceeding claims **characterized in that** each means (25) of directing flue gas resembles the form of a crown cap.

6. A heating apparatus according to any of the proceeding claims **characterized in that** each bulge (29) is preferably formed as a semicircle.
